# EUROPEAN PATENT APPLICATION

(11) **EP 4 137 670 A1**
(43) Date of publication of application: **22.02.2023**
(21) Application number: 21201947.5
(22) Date of filing: 11.10.2021
(51) Int. Cl.: F01D 11/00

(54) **SEALING DEVICE WITH DISPLACEABLE ABUTMENT**

(30) Priority: 19.08.2021 US 202163234940 P
(71) Applicant: Siemens Energy Global GmbH & Co. KG, 81739 München (DE)
(72) Inventor: Milazar, Mirko, 46049 Oberhausen (DE); Gent, Matthew, Jupiter, 33458 (US); Raben, Marcus, 45659 Recklinghausen (DE); Ritchie, Patrick M., Hobe Sound, 33455 (US); Wanjura, Stefan, 46147 Oberhausen (DE); Zhou, Kunyuan, 14055 Berlin (DE)

(57) **Abstract**

The invention is about a flat shaped sealing device (01) for sealing a gap between two parts having a sealing length and a sealing width from one side edge (18) to the opposite side edge (19) of at most 0,2-times the sealing length and having a sealing thickness from a bottom side (28) to a top side (29) of at most 0,2-times the sealing width. The sealing device (01) comprises a head section (02) and an adjacent main section (06). Thereby the head section (02) comprises an abutment (04) and a spring (05), wherein the abutment is displaceable towards the main section (02) and the spring (05) is therefore arranged between the abutment (04) and the main section (06) and is able to exert a force on the abutment (04).

## Description

### FIELD OF INVENTION

The invention relates to a sealing device for sealing a gap which is formed between two components.

### BACKGROUND OF INVENTION

In gas turbines platforms of stator vanes limit the annular flow path for the hot gas generated in combustion chambers. The platforms of adjacent stator vanes are arranged one beside the other forming small gaps therebetween. The gaps are needed for enabling thermal growth and movement of the stator vanes and their platform induced by thermal changes. In order to prevent hot gas being lost through these gaps and to avoid damage to carrier components arranged on the rear, it is known to seal these gaps with the aid of a sealing strip element, which is seated in two mutually opposite platforms grooves. At the same time, the rear area is supplied with cooling air that is needed for cooling the turbine parts. For achieving an improved sealing, EP0852659B1 proposed that the sealing sheets have a toothed surface on one side.

It is obvious, that a sealing strip element has two opposite ends. Next, due to the thermal growth and tolerances it is necessary to keep a free space within the available length of the gap to mount the sealing strip element. Therefore, the length of the sealing strip element is always less than the length of the gap (assuming that there is no open end at either end of the gap).

The available space in the longitudinal direction of the gap could lead to a movement of the sealing strip element along the gap. First, this could cause wear and a reduction of the lifetime. Second, this could lead to a remaining, not-covered gap at least at one end of the sealing strip element leading to an unwanted leakage.

In the continuously attempt to reduce the amount of cooling air for aiming an increased efficiency of the gas turbine a new seal element design is needed.

Hence, it is therefore objective of the invention to provide a long-life sealing device with further increased sealing properties.

### SUMMARY OF INVENTION

Accordingly, the first objective is achieved with a sealing device comprising the features of claim 1. In the depending claims further preferred features are given which can be arbitrarily combined.

The generic sealing device is intentionally used for sealing a gap between two adjacent parts. Here, advantageously the sealing device is used within a gas turbine to seal a gap between adjacent platforms of stator vanes or between adjacent ring segments.

The sealing device has a flat/plate-like, striped shape extending along a longitudinal direction from a foot end to a head end defining a sealing length. A sealing width is defined as distance from one side edge to an opposite side edge of the sealing device. The sealing device comprises further a bottom side and an opposite top side, wherein the distance between the bottom side to the top side defines a sealing thickness. According to the striped shape the sealing width is at most 0,2-times the sealing length and the sealing thickness is at most 0,2-times the sealing width.

The sealing device comprises at the head end a head section and an adjacent main section, wherein the main section extends along the longitudinal direction over the majority part and the head section over a smaller portion of the sealing length.

To enhance the sealing properties of the sealing device, the inventive solution makes use of a head section comprising an abutment and a spring. The abutment is arranged at the head end. Thereby the abutment is displaceable towards the main section.

The spring is arranged between the abutment and the main section. The spring is supported by the main section and exerts a force on the abutment in a direction from the main section to the head end.

With the new head section additional to the main section, the position of the sealing device within the gap could be fixed. Here, it is possible to enable a clamped (along the longitudinal direction) perfect fitting into the gap. Thereby, an uncertain leakage at a foot end could be minimized by the intended contact of the abutment at one end of the gap. This will also lead to a reduced wear due to the fixed position of the sealing device. Any thermal growth could be compensated by the spring with the movable abutment.

As the head section comprises the spring and the abutment the sealing feature is reduced compared to the main section.

Therefore, the length of an advantage head section is at most 2-times the sealing width and at most 0,2-times the sealing length.

It is possible, that the sealing device has along the longitudinal direction a curved shape. As the sealing has to fit into the respective seating at the parts to close the gap between the parts. Therefore, the shape in longitudinal direction is defined by the usage. But, if possible, it is advantage if the main section or in particular the sealing device is linear in the longitudinal direction.

To enable a beneficial sealing effect, especially if used in a gas turbine, it is further advantageous to implement a riffle structure on the bottom side and/or on the top side of the main section. The riffle structure could be continuous or interrupted.

As the sealing device has only a low sealing thickness and therefore only some space in that direction is available for the spring, it is further advantage, if the spring has a meandering shape between the abutment and the main section.

Regarding the arrangement of the spring between the abutment and the main section in principle three different options are possible.

In a first solution the spring is firmly connected with the abutment. At the other end the spring is supported by the main section. Here, it is necessary to mount a piece with the main section together with a piece with the abutment and the spring. Especially this solution is a good compromise between a simplified production of the parts and a mounting without any difficulties.

Second, it is possible to use three pieces, the main section, an abutment and a spring mounted between the main section and the abutment. Here, the production of the parts is less complex.

At a third advantage embodiment no further assembly to get the sealing device is necessary. Therefore, the spring is firmly connected with the main section and firmly connected with the abutment.

If less flexibility is necessary between the abutment and the main section it is advantage to use a spring with the shape analog a bending beam. Therefore, the spring needs to be connected with one end at one side edge of the main section. The opposite end of the spring forms the abutment. Here, it is possible to use one spring extending from one side edge connected with the main section to the other side edge with a free end as abutment. It is also possible to use two springs, each firmly connected with one side edge extending opposite to each other with the abutment in the middle of the sealing device.

An in particular advantage embodiment comprises further a cover, which is arranged at the top side and is firmly connected with the main section. Thereby the cover extends almost up to the head end and over the sealing width. To enable an advantage sealing at the head section, the spring - in particular the free space at the spring - has to be covered by the cover.

In case, the sealing device is made as one piece without further mounting and as there must be no firmly connection between the abutment and the cover, it is advantage to produce this embodiment by additive manufacturing.

As result, the head section comprises the cover with a reduced thickness compared to the main section. To provide sufficient space for the spring and the abutment, it is advantageous if the thickness of the cover is at most 0,3-times the sealing thickness.

As the abutment is arranged at the head end, preferably the abutment protrudes beyond the cover to the head end depending on its displacement, so that the abutment is at least partly covered by the cover. As result, an uncertain leakage also at a head end could be minimized.

Even if the cover has a reduced thickness, it is still advantage to implement a riffle structure at the top side. It is obvious that the depth of the riffle structure could not be as much as it is possible at the main section. But when using the riffle structure it is advantage if the riffle structure of the main section aligns with the riffle structure of the cover.

Next, it is possible that the sealing device is arranged with its head section cross to a further sealing element. If the further sealing element comprises also a riffle structure and the riffle structure of the sealing element faces the top side of the sealing device at the head section, it is advantage if the cover is flat on the top side.

To enhance the sealing effect at the head section by covering the spring with the cover, it is further advantage to extend the cover at both side edges down to the bottom side.

To enable a guiding of the abutment, especially if not given by the seating at the parts (where the sealing device is intentionally mounted) it is advantage if the cover provides a guide for the abutment supported by the rims of the cover at both side edges.

A further improvement of the sealing is enabled if the abutment has at least one locally increased cross section fitting into the guide provided by the cover. This reduces a leakage from the bottom side between the spring/abutment and the cover to the top side (or vice-versa).

The abutment intentionally extends beyond the cover (to enable the displacement towards the main section). To reduce any further leakage at the head end, it is further advantage, if the abutment has at the head end at the position not covered by the cover the sealing thickness and the sealing width.

In the following figures some advantageous embodiments for an inventive sealing device are shown:
- Fig. 1: shows a first example for a sealing device with a continuous riffle structure;
- Fig. 2: shows a section cut through the head section of the sealing device of fig. 1;
- Fig. 3: shows a view from the bottom side on the head section of the sealing device of fig. 1;
- Fig. 4: shows a view analog fig. 3 of a second example for a sealing device with a separate spring;

- Fig. 5: shows a third example for a sealing device with integral spring and abutment;
- Fig. 6: shows a view from the bottom side on the head section of the sealing device of fig. 5;
- Fig. 7: shows a section cut through an arrangement at the head end of the sealing device of fig. 5 with two adjacent parts and a further sealing stripe.

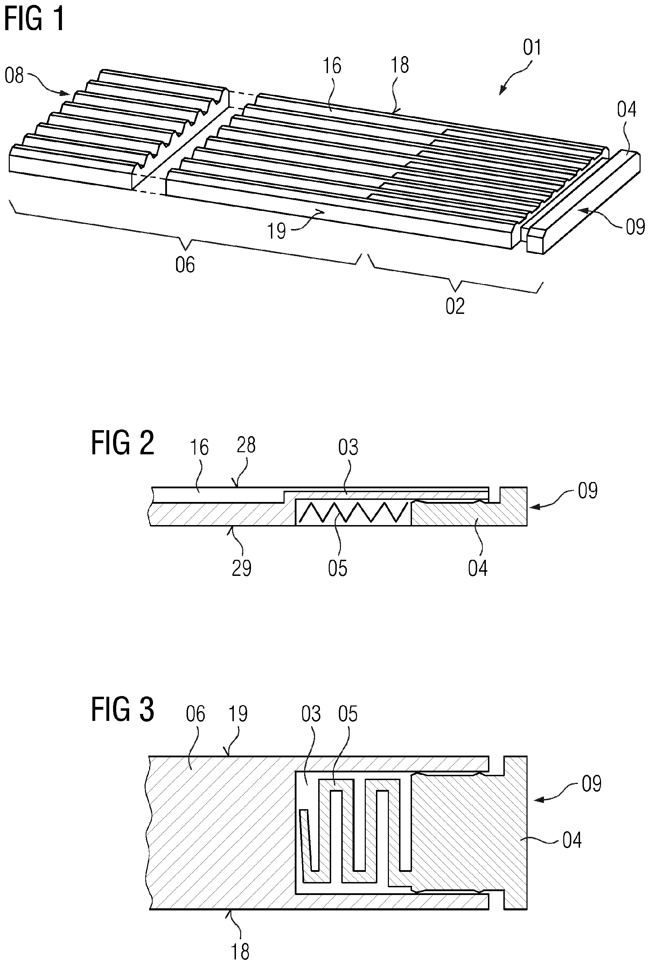

In figure 1 a first exemplary embodiment of an inventive sealing device 01 is shown in a 3D view on the top side. The sealing device 01 has an elongated flat shape extending in a longitudinal direction over a sealing length from a bottom end 08 (left side in the figure) to a head end 09. On the back side of the figure an edge 18 and at the front side of the figure the opposite edge 19 are arranged. The distance between the edges 18,19 defines the sealing width. From the drawing it is obvious, that the sealing length of the sealing device 01 is much larger than shown in the figure. Here, it is requested, that the sealing length is at least 5-times the sealing width. Next, the sealing device 01 has a top side 28 and an opposite bottom side 29 (see figure 2). At the top side 28 a riffle structure 16 extending in the longitudinal direction is arranged. The distance between the bottom side 29 and the top side 28 defines a sealing thickness, which is less than 0,2-times the sealing width.

Relevant for the invention is the arrangement of a head section 02 at the head end 09 next to a main section 06. This special head section 02 enables a fixed position of the sealing device 01 in the longitudinal direction. As it could be seen in Fig. 2 and Fig. 3 the head section comprises a cover 03 at the top side 28 and an abutment 04 below the cover 03 extending beyond the cover 03 at the head end 09. The abutment 04 of this embodiment is guided by the cover 03, which therefore extends on both edges 18, 19 down to the bottom side 29. To reduce any leakage through the gap at the intended location between at least two parts, the last end of the abutment 04 at the head end 09 has the same width and height as the sealing width and the sealing thickness.

In this embodiment the sealing device 01 is built from two pieces. One piece comprises the main section 06 and the cover 03, wherein the other piece comprises the abutment with an integral spring 05. The spring 05 has a meandering shape and is arranged between the abutment 04 and the main section 06.

This spring 05 enables a force on the abutment 04 away from the main section 06, whereby in a mounted position the abutment 04 can move towards the main section 06.

To provide a beneficial sealing the abutment 04 has at two positions (close to the end facing the spring and close to the end of the cover facing the head end) an increased cross section tight fit inside the space provided by the cover 03.

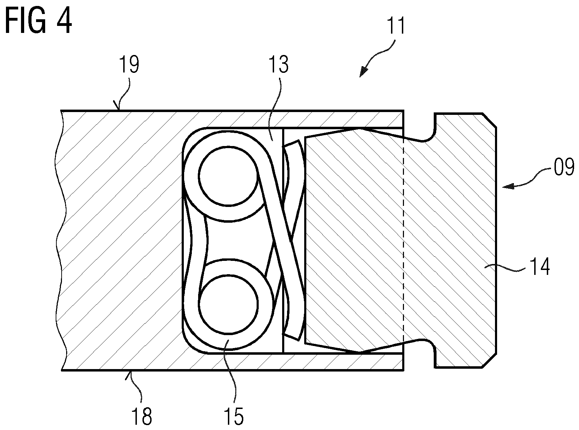

In figure 4 a further embodiment of a sealing device 11 is shown. The abutment 14 is similar to the solution before. But instead of an integral solution, here a spring 15 is mounted between the abutment 14 and the main section. As important feature the spring 15 is covered by the cover 13.

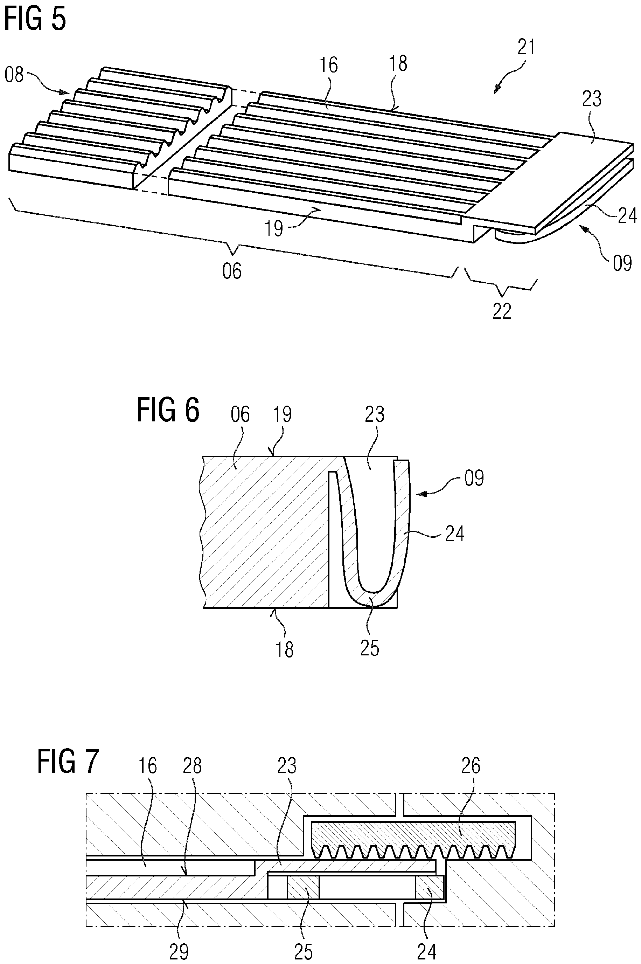

Figure 5 shows a third embodiment of a sealing device 21. The main section 06 is equal to the solution of figure 1. Also, there is the cover 23 firmly attached to the main section 06. To avoid any mounting of separate pieces, here the sealing device is made of one integral piece.

Therefore, the head section 22 comprises a spring 25 with a U-shape - as it could be seen best in figure 6 - and the abutment 24 as the end of the spring 25 facing the head end 09. The spring 25 is integrally attached to the main section 06 at one edge 19. To provide the flexibility of the spring 25 and the ability of the abutment 24 to move towards the main section 06 a minimum free distance (determined by the production possibilities) to the cover 23 is necessary.

Even if the cover 23 does not provide a side rim at the edges 18, 19 of the head section 22, the cover 23 still covers the spring 25 and reduces the leakage at the head end 09.

In figure 7 an arrangement of the sealing device 21 with the head section 22 is shown. Here, in the area of the head section 22 a further gap is arranged between a part extending along the sealing device 21 and another part located beyond the end of the sealing device 21. To seal this further gap a sealing stripe 26 is arranged cross to the longitudinal direction of the sealing device 21, wherein the sealing stripe 26 has also a riffle structure at the lower side. To enable a beneficial sealing between the sealing stripe 26 and the sealing device 21 the cover 23 has at the top side 28 a flat surface.

## Claims

1. Sealing device (01,11,21), for sealing a gap between two parts, having a flat shape and extending along a longitudinal direction over a sealing length from a foot end (08) to a head end (09) and having a sealing width from one side edge (18) to the opposite side edge (19) of at most 0,2-times the sealing length and having a sealing thickness from a bottom side (28) to a top side (29) of at most 0,2-times the sealing width and comprising a head section (02,12,22) arranged at the head end (09) and an adjacent main section (06),
**characterized in that**
the head section (02,12,22) comprises an abutment (04,14,24) and a spring (05,15,25), wherein the abutment is displaceable towards the main section (02,12,22), and wherein the spring (05,15,25) is arranged between the abutment (04,14,24) and the main section (06) and is able to exert a force on the abutment (04,14,24).

2. Sealing device (01,11,21) according to claim 1,
wherein the length of the head section (02,12,22) is at most 2-times the sealing width and at most 0,2-times the sealing length.

3. Sealing device (01,11,21) according to claim 1,
wherein the main section (06) and/or the sealing device (01,11,21) is linear along the longitudinal direction.

4. Sealing device (01,11,21) according to one of the claims 1 to 3,
wherein a riffle structure (16) is arranged at the bottom side (28) and/or the top side (09) of the main section (06) .

5. Sealing device (01,11) according to one of the claims 1 to 4,
wherein the spring (05) has a meandering shape.

6. Sealing device (01,21) according to one of the claims 1 to 5,
wherein the spring (05) is firmly connected with the abutment (04) and is supported by the main section (06); or
wherein the spring (15) mounted between the abutment (14) and the main section (06).

7. Sealing device (21) according to one of the claims 1 to 5,
wherein the spring (25) is firmly connected with the abutment (24) and with the main section (06).

8. Sealing device (21) according to claim 7,
wherein the spring (25) is designed as a bending beam and is connected to the main section (06) via a side edge (19), wherein the free end of the spring (25) forms the abutment (24).

9. Sealing device according to claim 8,
wherein two springs are arranged opposite to each other each connected with the main section via a side edge, wherein the free end of each spring forms an abutment.

10. Sealing device (01,11,21) according to one of the claims 1 to 9,
wherein the head section (02,12,22) comprises a cover (03,13,23), which (03,13,23) is arranged at the top side (29) and is firmly connected with the main section (06) and covers the spring (05,15,25).

11. Sealing device (01,11,21) according to claim 10,
wherein a cover thickness of the cover (03,13,23) is at most 0,3-times the sealing thickness; and/or
wherein the abutment (04,14,24) protrudes beyond the cover (03,13,23) at the head end (09).

12. Sealing device (01) according to claim 10 or 11,
wherein the cover (03) has a riffle structure according to the riffle structure of the main section (06), wherein in particular the depth of the riffle structure is reduced; or
wherein the cover (23) is flat on the top side.

13. Sealing device (01,11) according to one of the claims 10 to 12,
wherein the cover (03,13) extends at both side edges (18,19) down to the bottom side (28) and

14. Sealing device (01,11) according to claim 13,
wherein the cover (03,13) provides a guide for the abutment (04,14), which (04,14) has at least one locally increased cross section fitting into the guide enabling a sealing between the cover (03,13) and the abutment (04,14) .

15. Sealing device (01,11) according to one of the claims 10 to 14,
wherein the abutment (04,14) has adjacent to the head end (09) the sealing width and the sealing thickness.
